# EUROPEAN PATENT SPECIFICATION

(11) **EP 3 053 154 B1**
(45) Date of publication and mention of the grant of the patent: **13.05.2020**
(21) Application number: 14849834.8
(22) Date of filing: 26.09.2014
(51) Int. Cl.: G08G 1/00, B60W 30/165, B60W 30/17, G05D 1/02

(54) **SYSTEM AND METHOD TO CONTROL A VEHICLE PLATOON WITH TWO DIFFERENT DRIVING STRATEGIES**
SYSTEM UND VERFAHREN ZUR STEUERUNG EINER FAHRZEUGFLOTTE MIT ZWEI VERSCHIEDENEN FAHRSTRATEGIEN
SYSTÈME ET PROCÉDÉ DE COMMANDE DE PELOTON DE VÉHICULES SELON DEUX STRATÉGIES DE CONDUITE DIFFÉRENTES

(30) Priority: 30.09.2013 SE 1351130
(43) Date of publication of application: 10.08.2016
(73) Proprietor: Scania CV AB, 151 87 Södertälje (SE)
(72) Inventor: ALAM, Assad, S-121 31 Enskededalen (SE); LIANG, Kuo-Yun, S-127 45 Skärholmen (SE); PETTERSSON, Henrik, S-141 73 Segeltorp (SE)
(74) Representative: Scania CV AB
(86) International application number: PCT/SE2014/051122
(87) International publication number: WO 2015/047181

(56) References cited:
- JP-A- 2012 035 821
- US-A- 5 710 565
- US-A- 6 032 097
- US-A1- 2002 069 010
- US-A1- 2012 109 421
- US-A1- 2013 079 953
- US-A1- 2013 204 505
- L. MARQUES ET AL.: 'Design and development of a proof-of-concept platooning application using the HIDENETS architecture' IEEE /IFIP INTERNATIONAL CONFERENCE ON DEPENDABLE SYSTEMS&NETWORKS 2009, pages 223 - 228, XP031533167
- A. FERRARA ET AL.: 'Collision avoidance strategies and coordinated control of passenger vehicles' NONLINEAR DYN. vol. 49, 2007, pages 475 - 492, XP019532300

## Description

### Technical area

The present invention concerns a system and a method for vehicle platoons that can be driven with a position-based or a time-based driving strategy.

### Background to the invention

The intensity of traffic is high on major roads in Europe, and it is expected to increase. The increased transport of people and goods not only gives rise to traffic problems in the form of traffic queues, it also requires ever-increasing amounts of energy, which eventually gives rise to the emission of, for example, greenhouse gases. One possible contribution to solving these problems is to allow vehicles to be driven closer together in what are known as "vehicle platoons". The term "vehicle platoon" is here used to denote a number of vehicles with short distances between them, being driven as a single unit. The short distances lead to it being possible for more traffic to use the road, and the energy consumption for an individual vehicle will be reduced since the drag is reduced. The vehicles in the vehicle platoon are driven with at least one of an automated control of the speed of the vehicle and an automated control of its direction. This leads to vehicle drivers such as truck drivers being subject to a reduced load, accidents based on erroneous human decisions being reduced, and the possibility of reducing fuel consumption.
Studies show that the fuel consumption of the leading vehicle in the vehicle platoon can be reduced by 2 to 10%, and that of the following vehicle by 15 to 20%, from the fuel consumption of a vehicle driving alone. This is the case in conditions in which the distance between the trucks is 8-16 metres and the speed at which they travel is 80 km/h. The reduced fuel consumption gives a corresponding reduction in the emission of CO₂.

Drivers are already using this well-known fact, which has a reduced traffic safety as a consequence. One fundamental question related to vehicle platoons is how the time gap between vehicles can be reduced from the recommended 3 seconds to a value between 0.5 and 1 second, without affecting traffic safety. With distance sensors and cameras, the reaction time of the driver can be eliminated. This is a type of technology that is already being used today by systems such as ACC (adaptive cruise control) and LKA (lane-keeping assistance). One limitation, however, is that distance sensors and cameras require a clear view of the target, and this makes it difficult to detect events that lie more than a pair of vehicles ahead in the queue. A further limitation is that they cannot react proactively, i.e., react to events that have not had a significant effect on the traffic rhythm.
One possibility to enable vehicles to act proactively is to arrange that the vehicles communicate in order to be able to exchange information between them. One development of the IEEE-standard 802.11 for WLAN (wireless local area networks) known as "802.11p" makes possible the wireless transfer of information between vehicles, and between vehicles and infrastructure. Different types of information, such as vehicle parameters and strategies, can be transmitted to and from the vehicles. The development of communication technology, thus, has made it possible to design vehicles and infrastructure that can interact and act proactively. Vehicles can act as a unit and thus a shorter distance between them, and better global traffic flow, are made possible.
Exemplary technology is described in US-6032097 that relates to a vehicle platoon control system, and in US-2002/0069010 that relates to a method for controlling a vehicular velocity of a host vehicle to follow a preceding vehicle.
The control strategy for the vehicle platoon is most often designed to maintain the distance to the vehicle in front constant when driving in a vehicle platoon, and this strategy is usually, for example, that when the vehicle in front increases its speed (and thus the distance), the driver's own vehicle needs to increase its speed in order to come to the correct distance and to match the speed. The same is true in the case of a reduction in speed. The changes in speed in this case occur in principle at the same time. This strategy works well along a straight road with limited topography. On a road with a more complex topography with bends and hills, such a strategy will not be the most fuel-efficient, comfortable for the driver or safe (the risk of tipping) for the vehicle. In a bend, for example, synchronous speed regulation will mean that if the first vehicle increases its speed immediately at the end of the bend, then also the second vehicle and the subsequent vehicles will start to increase their speed in the bend, which is negative from the point of view of both safety and comfort.
The purpose of the invention is to specify an improved regulation of vehicles in vehicle platoons that can manage the varying situations that vehicle platoons can encounter, and at the same time to improve fuel-efficiency and safety.

### Summary of the invention

The purposes stated above are achieved with the invention defined by independent claims 1 and 7.

Preferred embodiments are defined by the dependent claims.

In general, the system and method allow a change between what is known as a "position-based" driving strategy and a "time-based" driving strategy, depending of a number of driving strategy criteria. A sudden braking of a vehicle in front, for example, may mean that the driving strategy is changed to a time-based driving strategy. According to another example, large deviations from the strategy that has been determined (a position-based driving strategy) may lead to a change of driving strategy.

According to the invention, the vehicles in the vehicle platoon may be controlled by two different driving strategies: a position-based driving strategy that is applied during normal driving and that is advantageous with respect to fuel-efficiency and comfort, and a time-based driving strategy that is applied during emergency situations and that therefore is advantageous with respect to safety and dealing with emergency situations.

By determining and evaluating one or several driving strategy criteria values, the driving strategy for the vehicles in the vehicle platoon can be determined to relate to either a position-based driving strategy or a time-based driving strategy, where different parts of the vehicle platoon can be driven with different driving strategies.

The invention does not primarily concern the design of the different driving strategies in themselves, but concerns instead that the vehicle platoon adapts its driving strategy, through changing the driving strategy as necessary, depending on the result of the evaluation of a number of criteria related to fuel-efficiency, comfort and safety.

When the vehicle platoon is to be driven with respect to high fuel-efficiency (and, of course, also high safety), a driving strategy is applied that is position-based. This is used to describe that, if the first vehicle in the vehicle platoon changes its speed (for example, if it increases its speed or reduces its speed in a manner that is not emergency braking or critical braking) at a certain position X, the second vehicle does not carry this out at the same time (synchronously), but carries it out instead at exactly the same point X at which the first vehicle carried out the change. It is possible to obtain knowledge of the position in several different ways, for example with the aid of GPS (Global Positioning System) or wireless communication between either or both of the vehicles and infrastructure, or with the aid of radar to calculate the distance to the vehicle in front and subsequently to calculate the position. The subsequent vehicles carry out the same manoeuvre and do not change their speed until they have reached the point X.

When the vehicle platoon encounters an unforeseen event, a driving strategy that is time-based (i.e. synchronised) is applied. This is used to describe that, if the first vehicle carries out for example emergency braking, the second vehicle and all subsequent vehicles are to brake at the same time. This leads to the safety of the vehicle platoon being maintained.

By evaluating a number of driving strategy criteria values, it is determined by which of the driving strategies that the vehicles are to be driven, and whether a change of driving strategy is to take place.

According to one example, a vehicle in the vehicle platoon carries out emergency braking. The braking vehicle transmits information to the vehicles that are affected (the vehicles behind), with the aid of, for example, wireless communication, that this is a critical situation. The vehicles behind can assess whether they lie within or outside of a safety zone. (It is possible to calculate, for example, a target value for the minimum distance that is to be maintained and, if the distance falls below this target value it means the a critical situation may arise, and this then requires that the time-based strategy is used).

As has been mentioned above, the position-based driving strategy is active primarily during normal driving, but as soon as a situation is assessed to be time-critical, and, for example, emergency braking is required, the time-based driving strategy takes over (i.e. the time-based driving strategy has higher priority than the position-based strategy in emergency situations).

The invention thus specifies a system and a method for driving strategies for vehicle platoons that achieves improved fuel-efficiency and safety.

The determination of a common driving strategy can take place either in any of the vehicles, such as the first vehicle, or in a local node (such as a calculation centre), or in a central unit.

The invention thus comprises a method to control a vehicle platoon that comprises at least one leader vehicle and one further vehicle, each of which has a positioning unit and a unit for wireless communication. The method comprises to determine two different driving strategies adapted to be applied for vehicles in the vehicle platoon, whereby these driving strategies are constituted by:
- a common position-based driving strategy adapted to be applied for vehicles in the vehicle platoon along a road horizon for the road ahead of the vehicle platoon, whereby the driving strategy comprises a driving profile comprising target values bᵢ and associated positions pᵢ along the road horizon of the vehicle platoon and that said target values are applied for each one of the vehicles at each position that belongs to a target value that is available, and
- a common time-based driving strategy adapted to be applied for vehicles in the vehicle platoon along a road horizon for the road ahead of the vehicle platoon, whereby the driving strategy comprises a driving profile comprising target values bᵢ along the road horizon of the vehicle platoon and that said each one of the vehicles applies the target value that is available at the same time.

According to the method, the vehicles in the vehicle platoon are adapted to be driven following at least one of the said position-based driving strategy and the said time-based driving strategy.

The method further comprises to:
- receive and evaluate one or several driving strategy criteria values,
- determine whether the said time-based driving strategy or position-based driving strategy is to be used, depending on the result of the evaluation,
- transmit the driving strategy that has been determined to vehicles in the vehicle platoon that are affected by the driving strategy, after which the vehicles in the vehicle platoon are controlled according to the driving strategy.

### Brief description of drawings

The invention will be described below with reference to the attached drawings, of which:
Figure 1 shows an example of a vehicle platoon that is travelling up a hill.
Figure 2 shows an example of a vehicle platoon that is travelling around a bend.
Figure 3 shows an example of a vehicle fᵢ in the vehicle platoon and illustrates how it may be equipped.
Figures 4A-4C show different examples of the design of the system.
Figure 5 shows a flow diagram for the method according to one embodiment of the invention.

### Detailed description of preferred embodiments of the invention

### Definitions

Vₖ: the speed of vehicle fₖ in the vehicle platoon with N vehicles.
D_{k,k+1} - the distance between vehicle fₖ and the vehicle behind it fₖ₊₁ in the vehicle platoon.

αₖ: the gradient at vehicle fₖ.
V2V-communication (vehicle-to-vehicle): wireless communication between vehicles, also known as vehicle-to-vehicle communication.
V2I-communication (vehicle-to-infrastructure): wireless communication between vehicles and infrastructure, such as road junctions and computer systems.

Certain "simpler" driving strategies for vehicle platoons that have been discussed above lead to a reduction in fuel consumption due to the reduced air resistance, by the inventors have realised that the fuel-efficiency of vehicle platoons can be increased even more if a certain degree of "slack" in the driving strategy is allowed, and instead allow a platoon to drive in a position-based manner, which will be explained in more detail below.

When the traffic is light, the bends are few and the terrain is not very hilly, a simple driving strategy, such as a strategy in which the distances between the vehicles is maintained essentially constant, can function well. It may be, however, more efficient in hilly terrain to control the vehicles by what is known as a "position-based" control strategy, for example, the vehicles in the platoon are to maintain a specific speed at a certain position before an uphill section. Unforeseen situations that a position-based control strategy cannot manage will, however, sometimes occur, and another strategy is required. Examples of such an event are a sudden, intense braking, and the intrusion of a vehicle into the platoon.

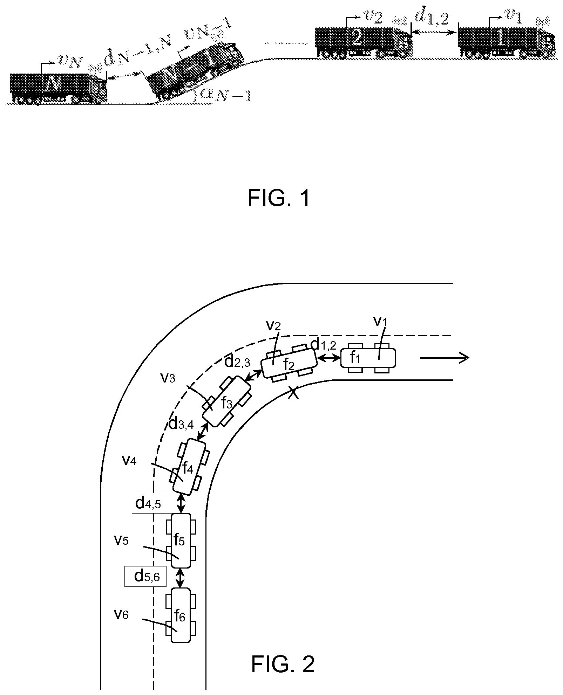

Figure 1 shows a vehicle platoon with N heavy vehicles fₖ that is proceeding with small spaces d_{k, k+1} between the vehicles, proceeding up a hill. The gradient at vehicle fₖ when it drives over the hill is shown as αₖ. Each vehicle fₖ is equipped with a receiver and a transmitter for wireless signals, shown as an aerial. The vehicles fₖ in the vehicle platoon can thus communicate with each other through V2V-communication, and to infrastructure using V2I-communication. The different vehicles fₖ have different masses mₖ.

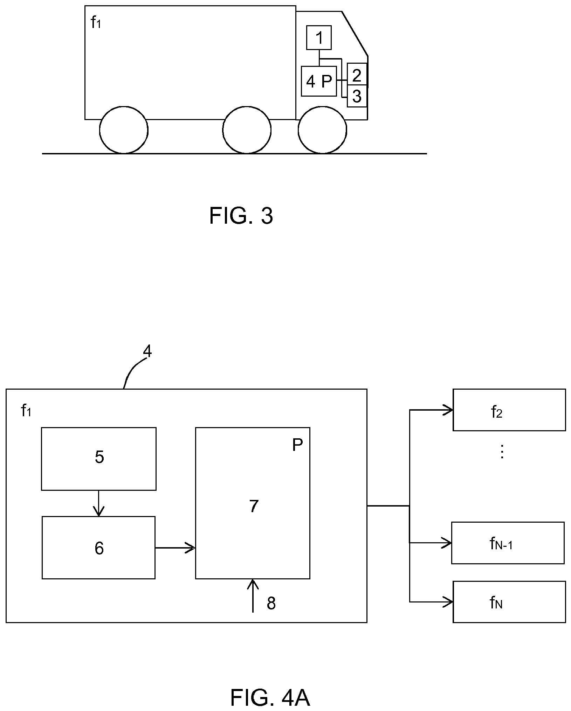

Figure 2 shows a vehicle platoon with N=6 heavy vehicles fₖ that, similarly to the example shown in Figure 1, is proceeding with small spaces d_{k k+1} between the vehicles, but which is, instead, proceeding around a bend. Also in this case is each vehicle fₖ equipped with a receiver and a transmitter 2 (Figure 3) for wireless signals, and can communicate through V2V-communication and V2I-communication.

Each of the vehicle platoons has a leader vehicle, which is normally the first vehicle. Each vehicle fₖ in the vehicle platoon has, for example, a unique vehicle identity and, for example, a vehicle platoon identity that is common for the complete vehicle platoon, in order to be able to maintain knowledge of which vehicles are members of the vehicle platoon. Data that are transmitted between the vehicles in the vehicle platoon can be tagged with these identities such that the vehicle of origin of the data that are received can be determined.

Figure 3 shows an example of a vehicle fₖ in the vehicle platoon and illustrates how it may be equipped. The vehicle fₖ is equipped with a positioning unit 1 that can determine the position of the vehicle fₖ. The positioning unit 1 may be, for example, configured to receive signals from a global positioning system such as GNSS (Global Navigation Satellite System), for example GPS (Global Positioning System), GLONASS, Galileo or Compass. Alternatively, the positioning unit 1 may be configured to receive signals from, for example, one or several detectors in the vehicle that measure relative distances to, for example, a road junction, vehicles in the surroundings, or similar entities, with known positions. Based on the relative distances, the positioning unit 1 can subsequently determine the position of the vehicle fₖ. A detector may be configured also to detect a signature in, for example, a road junction, whereby the signature represents a certain position. The positioning unit 1 may in this case be configured to determine its position through detection of the signature. The positioning unit 1 may instead be configured to determine the signal strength of one or several signals from a base station or road junction with known position, and in this way to determine the position of the vehicle fₖ by triangulation. The position of the vehicle fₖ can in this way be determined. Of course, the technologies described above may be combined in order to determine the position of vehicle fₖ. The positioning unit 1 is configured to generate a positioning signal that contains the position of the vehicle fₖ, and to transmit this signal to one or several units in the vehicle fₖ. The vehicle fₖ is, as has been mentioned above, equipped also with a unit 2 for wireless communication.

The unit 2 can receive at least one of wireless signals from other vehicles and wireless signals from infrastructure around the vehicle fₖ, and it can transmit at least one of wireless signals to other vehicles and wireless signals to infrastructure around the vehicle fₖ. The wireless signals can comprise vehicle parameters from other vehicles, for example their mass, torque developed, speed, and also more complex information such as, for example, the currently used driving profile, driving strategy, etc. The wireless signals may contain also information about the surroundings, such as the gradient of the road, its curvature, etc. The vehicle fₖ may be equipped also with one or several detectors 3 in order to detect the surroundings, for example a radar unit, a laser unit, a gradient gauge, etc. These detectors are generally labelled in Figure 3 as a detector unit 3, but they may be constituted by several different detectors located at different locations in the vehicle. The detector unit 3 is configured to determine a parameter, such as a relative distance, speed, gradient, etc., and to generate a detector signal that contains the parameter. The detector unit 3 is further configured to transmit the detector signal to one or several units in the vehicle fₖ. The vehicle may be equipped also with a map unit that can provide map information about the road ahead. The driver may, for example, specify a final position and the map unit can then, given that it has knowledge of the current position of the vehicle, provide relevant map data about the road ahead between the current position and the final destination.

The vehicle fₖ communicates internally between its various units through, for example, a bus, such as a CAN bus (controller area network), which uses a message-based protocol. Examples of other communication protocols that can be used are TTP (time-triggered protocol), Flexray, etc. Signals and data as described above can in this way be exchanged between various units in the vehicle fₖ. Signals and data can instead be transferred in a wireless manner, for example, between the various units.

There is also a system 4, fully or partially in the vehicle fₖ, that will be described below with reference to Figures 4A-4C, which show various examples of the system 4. The system 4 is generally for the purpose of regulating the vehicle platoon, and to establish a common driving strategy for the complete vehicle platoon, for example, one based on information about the road ahead. The system 4 to is particularly intended to control the vehicle platoon when it encounters any one of hills and bends. By establishing a common driving profile that applies to the complete vehicle platoon, a well organised vehicle platoon is achieved in which consideration is taken of what is best for the complete vehicle platoon when driving in a hill and in a bend, or when driving in a hill or in a bend.

Thus, the invention concerns a system 4 to control a vehicle platoon that comprises at least one leader vehicle and one further vehicle, each of which has a positioning unit 1 and a unit 2 for wireless communication.

The system 4 comprises a driving profile unit 6 configured to determine two different driving strategies adapted to be applied for vehicles in the vehicle platoon. These driving strategies are constituted by a position-based driving strategy and a time-based driving strategy, and they will be explained in more detail below.
The position-based driving strategy is adapted to be applied for affected vehicles in the vehicle platoon along a road horizon for the road ahead of the vehicle platoon. The driving strategy comprises a driving profile comprising target values bᵢ and associated positions pᵢ along the road horizon of the vehicle platoon and that the said target values are applied for each one of the affected vehicles at each position that belongs to a target value that is available. The said target values bᵢ comprise at least one of speed targets vᵢ, acceleration targets aᵢ and separation targets dᵢ.

One simple example is illustrated in Figure 2 where X marks a position pᵢ along the road horizon of the vehicle platoon. The position pᵢ has, according to the driving strategy, an associated target speed vᵢ. In the drawing, vehicle 2 passes the position pᵢ and is therefore to be controlled such that it is driven with speed vᵢ. When the vehicle 3 passes the position pᵢ, this vehicle is to be driven with speed vᵢ, etc. There are, of course, several positions along the road horizon with associated target speeds. There are preferably several positions with associated target speeds along road horizons with bends and in hilly terrain, i.e. where the speed varies, than there are in sections of road where the speed does not vary so much.

According to one embodiment, the driving profile unit 6 is configured to determine the driving profile for a vehicle fₖ in the vehicle platoon, preferably the leader vehicle, comprising the said target values bᵢ and the associated positions pᵢ for the vehicle fₖ at positions along the horizon and that said analysis unit is adapted to allow these to constitute the said common position-based driving strategy.

Figure 4A shows a block diagram of the embodiment in which the leader vehicle comprises the driving profile unit 6 and the analysis unit 7.

The time-based driving strategy is adapted to be applied for all affected vehicles in the vehicle platoon along a road horizon for the road ahead of the vehicle platoon. The driving strategy comprises a driving profile comprising target values bᵢ along the road horizon of the vehicle platoon and that each one of the affected vehicles applies the target values that are available at the same time. The time-based driving strategy is constituted in a simple example by a message to vehicles behind that a vehicle in front is braking hard.

The vehicles in the vehicle platoon are adapted to be driven following at least one of the said position-based driving strategy and the said time-based driving strategy. This can occur if, for example, an unknown vehicle inserts itself into a vehicle platoon. The vehicles behind the unknown vehicle then change to a time-based driving strategy while those in front continue with the driving strategy that they were using.

The system thus comprises an analysis unit 7 that is configured to:
- receive and evaluate one or several driving strategy criteria values 8,
- determine whether the said time-based driving strategy or position-based driving strategy is to be used, depending on the result of the said evaluation,
- generate a driving strategy signal that indicates the driving strategy that has been determined, and
- transmit the driving strategy signal to all vehicles in the vehicle platoon that are affected by the driving strategy, after which the vehicles in the vehicle platoon are controlled according to the driving strategy. The driving strategy can, of course, be transmitted to all vehicles in the vehicle platoon, but in this case lead to a change of driving strategy solely for the vehicles that are affected.

The driving strategy criteria values 8 preferably concern criteria related to emergency situations, and concern, for example, at least one of distances to obstacles or vehicles ahead and changes in the distance to the vehicle ahead. The driving strategy values 8 are determined by, for example, the detector unit 3 that has been described above.

Thus, the analysis unit 7 is configured to receive the said driving strategy criteria values 8 and to determine the distance to an obstacle or a vehicle in front. If, according to one example, the vehicle is being driven according to the position-based driving strategy and if the distance falls below a predetermined first distance, related to the speed of the vehicle, the driving strategy is changed to the said time-based driving strategy for the vehicles that are affected.

According to a second example, the analysis unit 7 is configured to receive the said driving strategy criteria values 8 and to determine the distance to an obstacle or a vehicle in front. If the vehicle is instead being driven according to the said time-based driving strategy and if the distance exceeds a predetermined second distance, related to the speed of the vehicle, the driving strategy is changed to the said position-based driving strategy for the vehicles that are affected.

The first and second distances may be the same, but it is preferable that the first distance be shorter than the second distance.

According to one example, the vehicle platoon is being driven by a position-based driving strategy in which the distance between the vehicles is normally 10 meters. If the distance between two vehicles falls below 5 meters (the first distance), a change to the time-based driving strategy takes place, and all vehicles that are affected change their speed at the same time. It may occur that the obstacle arises for some vehicle that is located within the vehicle platoon. In such a case, it is solely the vehicles behind that need to be affected and to change to the time-based driving strategy.

The return from the time-based driving strategy to the position-based driving strategy takes place when the distance once again is, for example, at least 10 meters (the second distance).

According to a more general example, the vehicle platoon is driven with a 10-meter gap between the vehicles, when travelling with a position-based driving strategy. One vehicle upstream in the vehicle platoon brakes suddenly, which leads to information being transferred to other vehicles that a change to a time-based driving strategy is to be carried out, and all vehicles brake in a synchronised manner.

As has been mentioned above, the position-based driving strategy is applied when the vehicle platoon is being driven in normal situations.

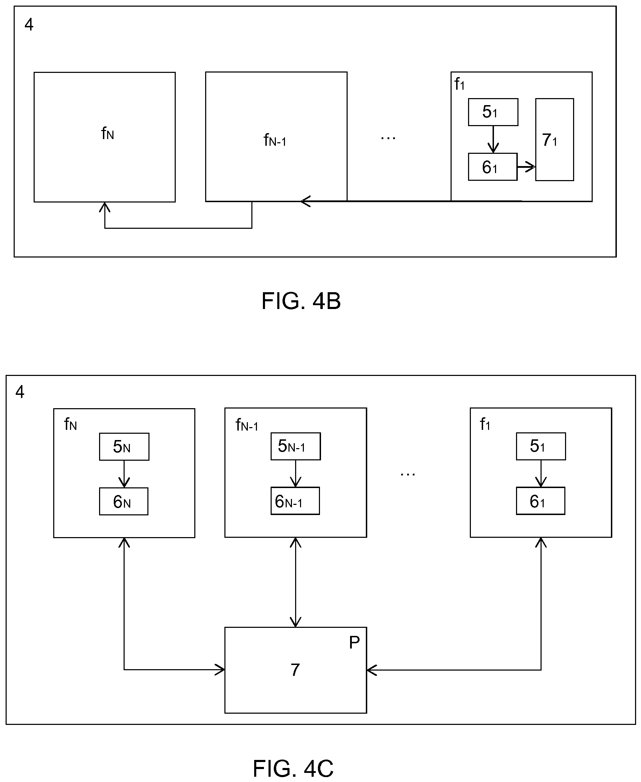

An example is illustrated in the block diagram in Figure 4B in which each one of the vehicles comprises a driving profile unit 6ᵢ and an analysis unit 7ᵢ, configured to receive driving strategy criteria values 8ᵢ. Communication in this example takes place between the vehicles according to any one of the methods described above, such as V2V or V2I.

A further example is illustrated in the block diagram in Figure 4C. In this example, the analysis unit 7 is arranged in an external unit in the infrastructure around the vehicle platoon. In the example that is illustrated, all vehicles are equipped with a driving profile unit 6. In such a case, the analysis unit 7 determines which driving profile is to be applied for the vehicle platoon. A variant of this example is one in which at least one vehicle, which is not necessarily the leader vehicle, determines a driving profile that is subsequently applied by affected vehicles in the vehicle platoon.

According to one embodiment of the system, the driving profile unit 6 is configured to determine continuously the current actual speed of the leader vehicle. This speed may be controlled by a known cruise-control system of some type, or through the leader vehicle being driven manually. The positioning unit of the leader vehicle is configured to determine positions that are associated with the actual speed, and to allow the current speed to constitute the said target value bᵢ, which, together with the associated position pᵢ, constitutes the driving strategy. This driving strategy is passed to all affected vehicles in the vehicle platoon, which are controlled according to the driving strategy.

The application of a position-based driving strategy means that the distances between the vehicles in the vehicle platoon must be allowed to vary. In order to avoid situations arising in which the distances between vehicles become too short, the driving strategy comprises a distance parameter d_{i,i+1} related to the distance to a vehicle in front in the vehicle platoon. The position-based driving strategy allows the distance between the vehicles in the vehicle platoon to vary between predetermined distance values related to the speed of the vehicle. If the distance falls below a minimum distance, the driving strategy ensures that the distance does not fall below this minimum distance by, for example, reducing the target speed.

It is the case for all embodiments that the positioning unit 1 may comprise in itself one or several units to determine the position values for the driving strategy. It comprises, for example, a unit for position determination by GPS, or a corresponding system, and a unit for measuring the distance to a vehicle in front, using, for example, radar. Also either or both of the wireless communication to other vehicles (V2V) and the wireless communication to infrastructure (V21) can be used to determine the position values.

The analysis unit 7 and the driving profile unit 6 may be constituted by one or several processor units and one or several memory units. A processor unit may be constituted by a CPU (central processing unit). The memory unit may comprise a transient or a non-transient memory or it may comprise a transient and a non-transient memory, such as flash memory or RAM (random access memory). The processor unit may be a part of a computer or a computer system, for example an ECU (electronic control unit), in a vehicle 2.

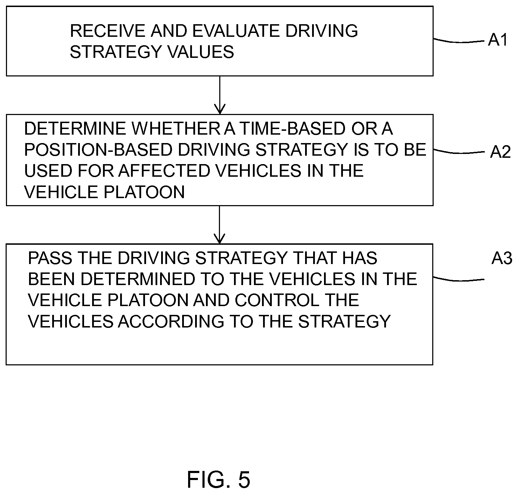

The invention concerns also a method to control a vehicle platoon that comprises at least one leader vehicle and one further vehicle, each of which has a positioning unit and a unit for wireless communication. The method will now be described with reference to the flow diagram in Figure 5, and with reference to relevant parts of the description of the system given above.

The method comprises to determine two different common driving strategies adapted to be applied for vehicles in the vehicle platoon.
The driving strategies are constituted by a position-based driving strategy and a time-based driving strategy. They are adapted to be applied for all affected vehicles in the vehicle platoon along a road horizon for the road ahead of the vehicle platoon.

The position-based driving strategy comprises a driving profile comprising target values bᵢ and associated positions pᵢ along the road horizon (for example 2 km) of the vehicle platoon, and that the said target values are applied for each one of the vehicles at each position that belongs to a target value that is available.

The time-based driving strategy comprises a driving profile comprising target values bᵢ along the road horizon of the vehicle platoon and that each one of the affected vehicles applies the target value that is available.

The target value may comprise any one of a target speed vᵢ, a target acceleration aᵢ and a target distance dᵢ.

Through application of the method, the vehicles in the vehicle platoon are adapted to be driven following at least one of the said position-based driving strategy and the said time-based driving strategy.
The method further comprises to (see Figure 5):
- receive and evaluate one or several driving strategy criteria values (A1),
- determine whether the said time-based driving strategy or position-based driving strategy is to be used, depending on the result of the evaluation (A2),
- transmit the driving strategy that has been determined to all vehicles in the vehicle platoon that are affected by the driving strategy, after which the vehicles in the vehicle platoon are controlled according to the driving strategy (A3).

According to one embodiment, the driving strategy criteria values concern criteria related to emergency situations, and concern, for example, at least one of distances to obstacles or vehicles in front and changes in the distance to the vehicle in front.

A number of different situations can arise.

According to one example, the vehicle platoon is being driven according to the position-based driving strategy. One of the vehicles identifies an obstacle in front of the vehicle. The distance to the obstacle is determined and, if the distance lies below a predetermined first distance, related to the speed of the vehicle, the driving strategy is changed to the time-based driving strategy. It is preferable that only the vehicles behind are required to change to the time-based driving strategy, since those in front are not affected.

If, instead, the vehicle platoon is being driven according to the time-based driving strategy, the method comprises to determine the distance to an obstacle or a vehicle in front (if such is still in place). If the distance exceeds a predetermined second distance, related to the speed of the vehicle, the driving strategy is changed to the said position-based driving strategy.

The vehicle platoon is driven in the normal case according to the position-based driving strategy.

According to one simple embodiment, the leader vehicle continuously determines its current speed and associated position, and allows the said current speed to constitute the said target value vᵢ, which, together with the associated position pᵢ, constitutes the driving strategy, and to pass this to all affected vehicles in the vehicle platoon, which are controlled according to the driving strategy.

The distances between the vehicles are allowed to vary during the application of the driving strategy. For this reason, the driving strategy comprises a distance parameter d_{i,i+1} related to the distance to a vehicle in front in the vehicle platoon. The position-based driving strategy allows the distance between the vehicles in the vehicle platoon to vary between predetermined distance values related to the speed of the vehicle.

As has been discussed above, the positioning unit is configured to determine the position values pᵢ for the driving strategy with the use of GPS and any one of radar and wireless communication.

The invention includes also a computer program product comprising the program code P stored on a medium that can be read by a computer in order to carry out the method steps described above. The computer program product may be, for example, a CD disk.

The present invention is not limited to the preferred embodiments described above. Various alternatives, modifications and equivalents can be used. The embodiments above are, therefore, not to be considered as limiting the scope of the invention, which is defined by the attached claims.

## Claims

1. A system (4) for controlling a vehicle platoon that comprises at least one leader vehicle and one additional vehicle, each of which has a positioning unit (1) and a unit (2) for wireless communication; wherein the system (4) comprises:
- a driving profile unit (6) configured to determine two different driving strategies adapted to be applied for the vehicles in the vehicle platoon, wherein these driving strategies are:
- a common position-based driving strategy adapted to be applied for vehicles in the vehicle platoon along a road horizon for the road ahead of the vehicle platoon, wherein the driving strategy comprises a driving profile comprising target values bᵢ and associated positions pᵢ along the road horizon of the vehicle platoon and that said target values are applied for each one of the vehicles at each corresponding position, and
- a common time-based driving strategy adapted to be applied for vehicles in the vehicle platoon along a road horizon for the road ahead of the vehicle platoon, wherein the driving strategy comprises a driving profile comprising target values bᵢ along the road horizon of the vehicle platoon and that each one of the vehicles applies the current target value,
wherein the vehicles in the vehicle platoon are adapted to be driven following the said position-based driving strategy and the said time-based driving strategy, and wherein
the time-based driving strategy has higher priority than the position-based driving strategy in emergency situations,
the system further comprising:
- an analysis unit (7) that is configured to:
- receive and evaluate one or several driving strategy criteria values (8),
- determine whether said time-based driving strategy or position-based driving strategy is to be used, depending on the result of the said evaluation,
- generate a driving strategy signal that indicates the driving strategy that has been determined, and
- transmit the driving strategy signal to vehicles in the vehicle platoon that are affected by the driving strategy, after which the vehicles in the vehicle platoon are controlled according to the driving strategy.

2. The system according to claim 1, wherein said driving strategy criteria values (8) concern criteria related to emergency situations.

3. The system according to claim 1 or 2, wherein said driving strategy criteria values (8) concern at least one of distances to obstacles or vehicles ahead and change of the distance to vehicle ahead.

4. The system according to claim 3, wherein the analysis unit (7) is configured to receive the said driving strategy criteria values (8) and to determine the distance to an obstacle or a vehicle ahead, and, if the vehicle is being driven according to the said position-based driving strategy and if the distance is below a predetermined first distance, related to the speed of the vehicle, the driving strategy is changed to the said time-based driving strategy.

5. The system according to claim 3, wherein the analysis unit (7) is configured to receive the said driving strategy criteria values (8) and to determine the distance to an obstacle or a vehicle in front, and, if the vehicle is being driven according to the said time-based driving strategy and if the distance exceeds a predetermined second distance, related to the speed of the vehicle, the driving strategy is changed to the said position-based driving strategy.

6. The system according to any one of claims 1-5, wherein the said position-based driving strategy is applied when the vehicle platoon is being driven in normal situations.

7. A method to control a vehicle platoon that comprises at least one lead vehicle and one additional vehicle, each of which has a positioning unit and a unit for wireless communication, the method comprising:
- determining two different driving strategies adapted to be applied for vehicles in the vehicle platoon, wherein these driving strategies are:
- a common position-based driving strategy adapted to be applied for vehicles in the vehicle platoon along a road horizon for the road ahead of the vehicle platoon, wherein the driving strategy comprises a driving profile comprising target values bᵢ and associated positions pᵢ along the road horizon of the vehicle platoon and that said target values are applied for each one of the vehicles at each corresponding position, and
- a common time-based driving strategy adapted to be applied for vehicles in the vehicle platoon along a road horizon for the road ahead of the vehicle platoon, wherein the driving strategy comprises a driving profile comprising target values bᵢ along the road horizon of the vehicle platoon and that each one of the vehicles applies the current target value,
wherein the vehicles in the vehicle platoon are adapted to be driven following the said position-based driving strategy and the said time-based driving strategy, and wherein
the time-based driving strategy has higher priority than the position-based driving strategy in emergency situations,
the method further comprising:
- receiving and evaluating one or several driving strategy criteria values,
- determining whether said time-based driving strategy or position-based driving strategy is to be used, depending on the result of the evaluation,
- transmitting the driving strategy that has been determined to vehicles in the vehicle platoon that are affected by the driving strategy, after which the vehicles in the vehicle platoon are controlled according to the driving strategy.

8. The method according to claim 7, wherein the said driving strategy criteria values concern criteria related to emergency situations.

9. The method according to claim 7 or 8, wherein said driving strategy criteria values concern at least one of distances to obstacles or vehicles ahead and change of the distance to vehicles ahead.

10. The method according to claim 9, wherein the method comprises determining the distance to an obstacle or a vehicle ahead, and, if the vehicle is being driven according to the said position-based driving strategy and if the distance is below a predetermined first distance, related to the speed of the vehicle, the driving strategy is changed to said time-based driving strategy.

11. The method according to claim 9, wherein the method comprises determining the distance to an obstacle or a vehicle in front, and, if the vehicle is being driven according to the said time-based driving strategy and if the distance exceeds a predetermined second distance, related to the speed of the vehicle, the driving strategy is changed to the said position-based driving strategy.

12. The method according to any one of claims 7-11, wherein said position-based driving strategy is applied when the vehicle platoon is being driven in normal situations.

13. A computer program (P) for a system (4), said computer program (P) comprising program code to cause the system (4) to carry out the steps according to any one of claims 7-12.

14. A computer program product comprising a program code stored on a medium that can be read by a computer in order to carry out the method steps according to any one of claims 7-12.

## Patentansprüche

1. System (4) zum Steuern eines Fahrzeugverbands, der wenigstens ein Führungsfahrzeug und ein weiteres Fahrzeug umfasst, von denen jedes eine Positionsbestimmungseinheit (1) und eine Einheit (2) zur Drahtloskommunikation hat, wobei das System (4) aufweist:
- eine Fahrzeugprofileinheit (6), die dazu konfiguriert ist, zwei verschiedene Fahrstrategien zu bestimmen, welche dazu eingerichtet sind, auf die Fahrzeuge in dem Fahrzeugverband angewandt zu werden, wobei diese Fahrstrategien sind:
- eine gemeinsame positionsbasierte Fahrstrategie, welche dazu eingerichtet ist, auf Fahrzeuge in dem Fahrzeugverband entlang eines Straßenhorizonts für die vor dem Fahrzeugverband befindliche Straße angewandt zu werden, wobei die Fahrstrategie ein Fahrprofil mit Zielwerten bᵢ und zugehörigen Positionen pᵢ entlang des Straßenhorizonts des Fahrzeugverbands enthält und dass die Zielwerte auf jedes der Fahrzeuge an jeder entsprechenden Position angewandt werden, und
- eine gemeinsame zeitbasierte Fahrstrategie, die dazu eingerichtet ist, auf Fahrzeuge in dem Fahrzeugverband entlang eines Straßenhorizonts für die vor dem Fahrzeugverband befindliche Straße angewandt zu werden, wobei die Fahrstrategie ein Fahrprofil mit Zielwerten bᵢ entlang des Straßenhorizonts des Fahrzeugverbands enthält und dass jedes der Fahrzeuge den aktuellen Zielwert anwendet,
wobei die Fahrzeuge in dem Fahrzeugverband dazu eingerichtet sind, der positionsbasierten Fahrstrategie und der zeitbasierten Fahrstrategie folgend gefahren zu werden, und wobei
die zeitbasierte Fahrstrategie in Notsituationen eine höhere Priorität hat als die positionsbasierte Fahrstrategie,
wobei das System ferner aufweist:
- eine Analyseeinheit (7), die eingerichtet ist zum:
- Empfangen und Auswerten eines oder mehrerer Fahrstrategiekriteriumswerte (8),
- Bestimmen, abhängig von dem Ergebnis der Auswertung, ob die zeitbasierte Fahrstrategie oder die positionsbasierte Fahrstrategie verwendet werden soll,
- Erzeugen eines Fahrstrategiesignals, welches die Fahrstrategie angibt, die bestimmt worden ist, und
- Senden des Fahrstrategiesignals an Fahrzeuge in dem Fahrzeugverband, die von der Fahrstrategie beeinflusst sind, wonach die Fahrzeuge in dem Fahrzeugverband gemäß der Fahrstrategie gesteuert werden.

2. System nach Anspruch 1, bei dem die Fahrstrategiekriteriumswerte (8) mit Notfallsituationen in Beziehung stehende Kriterien betreffen.

3. System nach Anspruch 1 oder 2, bei dem die Fahrstrategiekriteriumswerte (8) Abstände zu vorausbefindlichen Hindernissen oder Fahrzeugen und/oder eine Änderung des Abstands zum vorausbefindlichen Fahrzeug umfassen.

4. System nach Anspruch 3, bei dem die Analyseeinheit (7) dazu ausgeführt ist, die Fahrstrategiekriteriumswerte (8) zu empfangen und den Abstand zu einem vorausbefindlichen Hindernis oder einem Fahrzeug zu ermitteln und, falls das Fahrzeug gemäß der positionsbasierten Fahrstrategie gefahren wird und falls der Abstand im Verhältnis zur Geschwindigkeit des Fahrzeugs kleiner als ein vorbestimmter erster Abstand ist, die Fahrstrategie in die zeitbasierte Fahrstrategie geändert wird.

5. System nach Anspruch 3, bei dem die Analyseeinheit (7) dazu ausgeführt ist, die Fahrstrategiekriteriumswerte (8) zu empfangen und den Abstand zu einem vorausbefindlichen Hindernis oder einem Fahrzeug zu ermitteln und, falls das Fahrzeug gemäß der zeitbasierten Fahrstrategie gefahren wird und falls der Abstand im Verhältnis zur Geschwindigkeit des Fahrzeugs einen vorbestimmten zweiten Abstand übersteigt, die Fahrstrategie in die positionsbasierte Fahrstrategie geändert wird.

6. System nach einem der Ansprüche 1 bis 5, bei dem die positionsbasierte Fahrstrategie angewendet wird, wenn der Fahrzeugverband in Normalsituationen gefahren wird.

7. Verfahren zur Steuerung eines Fahrzeugverbands, der zumindest ein Führungsfahrzeug und ein weiteres Fahrzeug umfasst, von denen jedes eine Positionsbestimmungseinheit und eine Einheit zur Drahtloskommunikation hat, wobei das Verfahren umfasst:
- Bestimmen zweier unterschiedlicher Fahrstrategien, die dazu eingerichtet sind, auf Fahrzeuge in dem Fahrzeugverband angewandt zu werden, wobei diese Fahrstrategien sind:
- eine gemeinsame positionsbasierte Fahrstrategie, die dazu eingerichtet ist, auf Fahrzeuge in dem Fahrzeugverband entlang eines Straßenhorizonts für die vor dem Fahrzeugverband befindliche Straße angewandt zu werden, wobei die Fahrstrategie ein Fahrprofil mit Zielwerten bᵢ und zugehörigen Positionen pᵢ entlang des Straßenhorizonts des Fahrzeugverbands enthält und dass die Zielwerte für jedes der Fahrzeuge an jeder entsprechenden Position angewandt werden, und
- eine gemeinsame zeitbasierte Fahrstrategie, die dazu eingerichtet ist, auf Fahrzeuge in dem Fahrzeugverband entlang eines Straßenhorizonts für die vor dem Fahrzeugverband befindliche Straße angewandt zu werden, wobei die Fahrstrategie ein Fahrprofil mit Zielwerten bᵢ entlang des Straßenhorizonts des Fahrzeugverbands umfasst und dass jedes der Fahrzeuge den aktuellen Zielwert anwendet,
wobei die Fahrzeuge in dem Fahrzeugverband dazu eingerichtet sind, der positionsbasierten Fahrstrategie und der zeitbasierten Fahrstrategie folgend gefahren zu werden, und wobei
die zeitbasierte Fahrstrategie in Notfallsituationen eine höhere Priorität hat als die positionsbasierte Fahrstrategie,
wobei das Verfahren ferner umfasst:
- Empfangen und Auswerten eines oder mehrerer Fahrstrategiekriteriumswerte,
- Bestimmen, abhängig von dem Ergebnis der Auswertung, ob die zeitbasierte Fahrstrategie oder die positionsbasierte Fahrstrategie verwendet werden soll,
- Senden der bestimmten Fahrstrategie an Fahrzeuge in dem Fahrzeugverband, die durch die Fahrstrategie beeinflusst sind, wonach die Fahrzeuge in dem Fahrzeugverband gemäß der Fahrstrategie gesteuert werden.

8. Verfahren nach Anspruch 7, bei dem die Fahrstrategiekriteriumswerte mit Notfallsituationen in Beziehung stehende Kriterien betreffen.

9. Verfahren nach Anspruch 7 oder 8, bei dem die Fahrstrategiekriteriumswerte Abstände zu vorausbefindlichen Hindernissen oder Fahrzeugen und/oder eine Änderung des Abstands zu vorausbefindlichen Fahrzeug betreffen.

10. Verfahren nach Anspruch 9, bei dem das Verfahren umfasst ein Ermitteln des Abstands zu einem vorausbefindlichen Hindernis oder einem Fahrzeug und, falls das Fahrzeug gemäß der positionsbasierten Fahrstrategie gefahren wird und falls der Abstand im Verhältnis zur Geschwindigkeit des Fahrzeugs kleiner als ein erster vorbestimmter Abstand ist, die Fahrstrategie in die zeitbasierte Fahrstrategie geändert wird.

11. Verfahren nach Anspruch 9, bei dem das Verfahren umfasst ein Ermitteln des Abstands zu einem vorausbefindlichen Hindernis oder einem Fahrzeug und, falls das Fahrzeug gemäß der zeitbasierten Fahrstrategie gefahren wird und falls der Abstand im Verhältnis zur Geschwindigkeit des Fahrzeugs einen vorbestimmten zweiten Abstand übersteigt, die Fahrstrategie in die positionsbasierte Fahrstrategie geändert wird.

12. Verfahren nach einem der Ansprüche 7 bis 11, bei dem die positionsbasierte Fahrstrategie angewandt wird, wenn der Fahrzeugverband in Normalsituationen gefahren wird.

13. Computerprogramm (P) für ein System (4), wobei das Computerprogramm (P) Programmcode aufweist, um das System (4) dazu zu veranlassen, die Schritte nach einem der Ansprüche 7 bis 12 auszuführen.

14. Computerprogrammprodukt mit einem Programmcode, der auf einem Medium gespeichert ist, das von einem Computer gelesen werden kann, um die Verfahrensschritte nach einem der Ansprüche 7 bis 12 auszuführen.

## Revendications

1. Système (4) pour le contrôle d'un peloton de véhicules qui comprend au moins un véhicule de tête et un véhicule supplémentaire, chacun d'eux a une unité de positionnement (1) et une unité (2) pour une communication sans fil, dans lequel le système (4) comprend :
- une unité de profil de conduite (6) configurée pour déterminer deux stratégies de conduite différentes adaptées pour être appliquées pour les véhicules dans le peloton de véhicules, dans lequel ces stratégies de conduite sont :
- une stratégie de conduite sur base de la position commune adaptée à être appliquée pour les véhicules dans le peloton de véhicules le long d'un horizon de route pour la route devant le peloton de véhicules, dans lequel la stratégie de conduite comprend un profil de conduite comprenant les valeurs cibles bᵢ et les positions associées pᵢ le long de l'horizon de route du peloton de véhicules et que lesdites valeurs cibles sont appliquées pour chacun des véhicules à chaque position correspondante, et
- une stratégie de conduite sur base du temps commune adaptée pour être appliquée pour des véhicules dans le peloton de véhicules, le long d'un horizon de route pour la route devant le peloton de véhicules, dans lequel la stratégie de conduite comprend un profil de conduite comprenant des valeurs cibles bᵢ le long de l'horizon de route du peloton de véhicules et que chacun des véhicules applique la valeur cible actuelle,
dans lequel les véhicules dans le peloton de véhicules sont adaptés pour être conduits suivant ladite stratégie de conduite sur base de la position et ladite stratégie de conduite sur base du temps, et dans laquelle
la stratégie de conduite sur base du temps a une priorité plus élevée que la stratégie de conduite sur base de la position dans des situations d'urgence, le système comprenant en outre :
- une unité d'analyse (7) qui est configurée pour :
- recevoir et évaluer une ou plusieurs valeurs de critères de stratégie de conduite (8),
- déterminer si ladite stratégie de conduite sur base du temps ou ladite stratégie de conduite sur base de la position doit être utilisée, en fonction du résultat de ladite évaluation,
- générer un signal de stratégie de conduite qui indique la stratégie de conduite qui a été déterminée, et
- transmettre le signal de stratégie de conduite au peloton de véhicules qui sont affectés par la stratégie de conduite, après quoi les véhicules dans le peloton de véhicules sont contrôlés conformément à la stratégie de conduite.

2. Système selon la revendication 1, dans lequel lesdites valeurs de critère de stratégie de conduite (8) concernent des critères liés à des situations d'urgence.

3. Système selon la revendication 1 ou 2, dans lequel lesdites valeurs de critère de stratégie de conduite (8) concernent au moins une des distances par rapport à des obstacles ou à des véhicules devant et un changement de distance par rapport véhicule devant.

4. Système selon la revendication 3, dans lequel l'unité d'analyse (7) est configurée pour recevoir les valeurs de critères de stratégie de conduite (8) et pour déterminer la distance par rapport à un obstacle ou à un véhicule devant, et, si le véhicule est conduit selon ladite stratégie de conduite sur base de la position, et si la distance est inférieure à une première distance prédéterminée, liée à la vitesse du véhicule, la stratégie de conduite est remplacée par ladite stratégie de conduite sur base du temps.

5. Système selon la revendication 3, dans lequel l'unité d'analyse (7) est configurée pour recevoir les valeurs de critères de stratégie de conduite (8) et pour déterminer la distance par rapport à un obstacle ou à un véhicule devant et, si le véhicule est conduit selon ladite stratégie de conduite sur base du temps et si la distance dépasse une deuxième distance prédéterminée, liée à la vitesse du véhicule, la stratégie de conduite est remplacée par ladite stratégie de conduite sur base de la position.

6. Système selon l'une quelconque des revendications 1-5, dans lequel ladite stratégie de conduite sur base de la position est appliquée lorsque le peloton de véhicules est conduit dans des situations normales.

7. Procédé pour contrôler un peloton de véhicules qui comprend au moins un véhicule de tête et un véhicule supplémentaire, chacun d'eux a une unité de positionnement et d'une unité pour une communication sans fil, le procédé comprenant :
- la détermination de deux stratégies de conduite différentes adaptées pour être appliquées pour des véhicules dans le peloton de véhicules, dans lequel ces stratégies de conduite sont :
- une stratégie de conduite sur base de la position commune adaptée à être appliquée pour les véhicules dans le peloton de véhicules le long d'un horizon de route pour la route devant le peloton de véhicules, dans lequel la stratégie de conduite comprend un profil de conduite comprenant les valeurs cibles bᵢ et les positions associées pᵢ le long de l'horizon de route du peloton de véhicules et que lesdites valeurs cibles sont appliquées pour chacun des véhicules à chaque position correspondante, et
- une stratégie de conduite sur base du temps commune adaptée pour être appliquée pour des véhicules dans le peloton de véhicules, le long d'un horizon de route pour la route devant le peloton de véhicules, dans lequel la stratégie de conduite comprend un profil de conduite comprenant des valeurs cibles bᵢ le long de l'horizon de route du peloton de véhicules et que chacun des véhicules applique la valeur cible actuelle,
dans lequel les véhicules dans le peloton de véhicules sont adaptés pour être conduits suivant ladite stratégie de conduite sur base de la position et ladite stratégie de conduite sur base du temps, et dans laquelle
la stratégie de conduite sur base du temps a une priorité plus élevée que la stratégie de conduite sur base de la position dans des situations d'urgence, le procédé comprenant en outre :
- la réception et l'évaluation d'une ou plusieurs valeurs de critères de stratégie de conduite,
- la détermination de si ladite stratégie de conduite sur base du temps ou ladite stratégie de conduite sur base de la position doit être utilisée, en fonction du résultat de ladite évaluation,
- la transmission de la stratégie de conduite qui a été déterminée pour des véhicules qui sont affectés par la stratégie de conduite, après quoi. les véhicules dans le peloton de véhicules sont contrôlés conformément à la stratégie de conduite.

8. Procédé selon la revendication 7, dans lequel lesdites valeurs de critère de stratégie de conduite concernent des critères liés à des situations d'urgence.

9. Procédé selon la revendication 7 ou 8, dans lequel lesdites valeurs de critère de stratégie de conduite concernent au moins une des distances par rapport à des obstacles ou à des véhicules devant et le changement de la distance par rapport aux véhicule devant.

10. Procédé selon la revendication 9, dans lequel le procédé comprend la détermination de la distance par rapport à un obstacle ou à un véhicule devant, et, si le véhicule est conduit selon ladite stratégie de conduite sur base de la position et si la distance est inférieure à une première distance prédéterminée, liée à la vitesse du véhicule, la stratégie de conduite est remplacée par ladite stratégie de conduite sur base du temps.

11. Procédé selon la revendication 9, dans lequel le procédé comprend la détermination de la distance par rapport à un obstacle ou à un véhicule devant, et, si le véhicule est conduit selon ladite stratégie de conduite sur base du temps et si la distance dépasse une deuxième distance prédéterminée, liée à la vitesse du véhicule, la stratégie de conduite est modifiée par ladite stratégie de conduite sur base de la position.

12. Procédé selon l'une quelconque des revendications 7-11, dans lequel ladite stratégie de conduite sur base de la position est appliquée lorsque le peloton de véhicules est conduit dans des situations normales.

13. Programme informatique (P) pour un système (4), ledit programme informatique (P) comprenant un code du programme pour amener le système (4) à réaliser les étapes selon l'une quelconque des revendications 7-12.

14. Produit de programme informatique comprenant un code de programme stocké sur un support pouvant être lu par un ordinateur afin de réaliser les étapes du procédé selon l'une quelconque des revendications 7-12.
